# EUROPEAN PATENT APPLICATION

(11) **EP 4 344 045 A1**
(43) Date of publication of application: **27.03.2024**
(21) Application number: 23195008.0
(22) Date of filing: 04.09.2023
(51) Int. Cl.: H02M 7/5395, H02M 7/483, H02M 1/00, H02M 1/12, H02M 1/15, H02M 1/44, H02J 3/01, H02P 29/50

(54) **HARMONIC SUPPRESSION DEVICE**

(30) Priority: 22.09.2022 JP 2022151094
(71) Applicant: Toshiba Carrier Corporation, Kawasaki-Shi, Kanagawa 212-8585 (JP)
(72) Inventor: Kubota, Yohei, Shizuoka, 416-8521 (JP); Nishio, Motoki, Shizuoka, 416-8521 (JP)
(74) Representative: Gramm, Lins & Partner Patent- und Rechtsanwälte PartGmbB

(57) **Abstract**

According to one embodiment, a harmonic suppression device which retains current values of load currents (Ir, Is, It) flowing through the system lines (Lr, Ls, Lt) at intervals of a predetermined time (t) within one cycle (T) of each of voltages (Vr, Vs, Vt) of the AC system (1), detects harmonic components contained in the load currents (Ir, Is, It) on the basis of a predetermined number (N) of current values among the retained current values, obtains compensating currents (Icr, Ics, Ict) to be added to the load currents (Ir, Is, It) in order to suppress the detected harmonic components, causes a power converter (20) to output the obtained compensating currents (Icr, Ics, Ict), and variably sets the predetermined number (N) according to a state of the AC system (1).

## Description

### FIELD

Embodiments described herein relate generally to a harmonic suppression device configured to suppress harmonics.

### BACKGROUND

When a load having nonlinear characteristics such as a diode rectifier or the like is connected to an AC system, harmonic components are created in the electric current (load current) flowing through the load. The harmonic currents adversely affect other loads through the AC system, and hence it has been an important problem how to suppress the harmonic currents.

As a countermeasure against the above, a harmonic suppression device configured to suppress harmonic components contained in the load current, i.e., a so-called active filter is used. The active filter includes a switching circuit constituted of a plurality of semiconductor switch elements and DC capacitor a conduction path of which is formed through the aforementioned switching circuit and, by creating a compensating current for harmonic suppression by using the voltage of the DC capacitor and by supplying the compensating current to a system line between the AC source and load, the harmonic components contained in the load current are suppressed.

The aforementioned active filter has a problem that it is desired that voltage variation occurring at the DC capacitor be suppressed for the purpose of reducing the capacity of the DC capacitor. As a technique coping with this problem, a k-step compensator coping with a sudden change in the load current at the time when a compensating current for harmonic suppression is created is proposed (Transactions of the Institute of Electrical Engineers of Japan D Vol. 135 No. 6 pp. 718-724 2015). Owing to the adoption of the k-step compensator, it becomes possible to suppress the useless voltage variation occurring at the DC capacitor.

However, on the contrary, it has been found that, to make the matter worse, distortion is created in the system current concomitantly with the adoption of the k-step compensator and depending on the state of the AC system.

### BRIEF DESCRIPTION OF THE DRAWINGS

FIG. 1 is a block diagram showing the configuration of a first embodiment.
FIG. 2 is a block diagram showing the configuration of a main part of a controller in the first embodiment.
FIG. 3 is a block diagram showing the configuration of a compensator in FIG. 2.
FIG. 4 is a view showing waveforms of a system voltage, load current, d-axis load current, and q-axis load current.
FIG. 5 is a view showing changes in the d-axis load current Id, low-frequency component Idx, and target value Idref of a case where a sag occurs in the system voltage in a state where no compensator is provided in the first embodiment.
FIG. 6 is a view showing changes in the d-axis load current Id, low-frequency component Iqx, and target value Idref of a case where a sag occurs in the system voltage in a state where a compensator is provided in the first embodiment.
FIG. 7 is a view showing the state where a distortion occurring in the system current differs according to presence/absence of compensators and the predetermined number N when the AC system is in a stable state in the first embodiment.
FIG. 8 is a view showing, for each of frequencies, the state where a distortion occurring in the system current differs according to presence/absence of compensators and the predetermined number N when the AC system is in a stable state in the first embodiment.
FIG. 9 is a view showing the system currents of a case where an imbalance occurs in the system voltages in a state where no compensators are provided in the first embodiment together with the system voltages and load currents.
FIG. 10 is a view showing the system currents of a case where an imbalance occurs in the system voltages in a state where compensators are provided in the first embodiment and the predetermined number N is "1" together with the system voltages and load currents.
FIG. 11 is a view showing the system currents of a case where an imbalance occurs in the system voltages in a state where compensators are provided in the first embodiment and the predetermined number N is "6" together with the system voltages and load currents.
FIG. 12 is a flowchart showing the control of the first embodiment.
FIG. 13 is a block diagram showing the configuration of a second embodiment.
FIG. 14 is a view showing the configuration of each unit converter in FIG. 13.
FIG. 15 is a view showing the configuration of a power feeding circuit in FIG. 14.
FIG. 16 is a view showing the configuration of a modified example of the power feeding circuit in FIG. 14.
FIG. 17 is a view showing the configuration of a modified example of each unit converter in FIG. 13.

### DETAILED DESCRIPTION

In general, according to one embodiment, a harmonic suppressing device includes a power converter which is connected to system lines between an AC system and a load, creates AC voltages, and outputs the created AC voltages to the system lines; and a controller which retains current values of load currents flowing through the system lines at intervals of a predetermined time within one cycle of each of voltages of the AC system, detects harmonic components contained in the load currents on the basis of a predetermined number of current values among the retained current values, obtains compensating currents to be added to the load currents in order to suppress the detected harmonic components, causes the power converter to output the obtained compensating currents, and variably sets the predetermined number according to a state of the AC system.

### DETAILED DESCRIPTION

Embodiments will be described hereinafter with reference to the accompanying drawings. Throughout the embodiments, common elements are denoted by like reference numerals, and a detailed description thereof may be omitted unless otherwise necessary. Further, in order to make the description clearer, the widths, thicknesses, shapes, etc., of the respective parts are schematically illustrated in the drawings, compared to the actual modes. These parts can be redesigned or remodeled as needed with reference to the following descriptions and the conventional techniques.
[1] A first embodiment of the present invention will be described below with reference to the accompanying drawings.

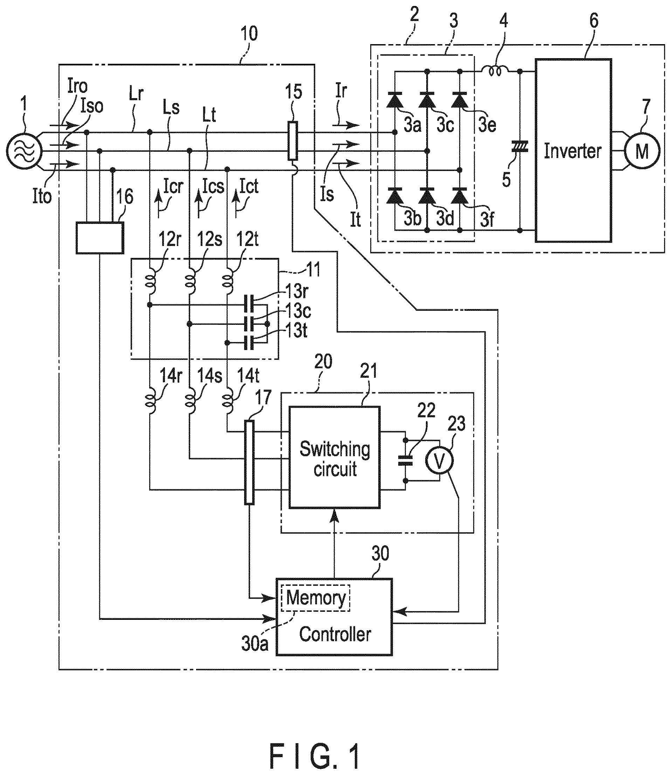

As shown in FIG. 1, a load, for example, an air conditioner 2 is connected to system lines (power-supply lines) Lr, Ls, and Lt of a three-phase AC system (including a three-phase AC source, power system, distribution system, and the like).

The air conditioner 2 includes a full-wave rectifying circuit 3 constituted of bridge connection of six diodes 3a to 3f which are loads each having nonlinear characteristics and configured to subject the system voltages (AC voltages) Vr, Vs, and Vt of the three-phase AC system 1 to full-wave rectification, DC capacitor 5 connected to output ends of the full-wave rectifying circuit 3 through a DC reactor 4, inverter 6 connected to both ends of the DC capacitor 5, and compressor motor 7 operated by the output of the inverter 6. The inverter 6 converts the DC voltage of the DC capacitor 5 into AC voltages of a predetermined frequency by switching, and outputs the AC voltages as drive power of the compressor motor 7.

A harmonic suppression device 10 of this embodiment is connected to the system lines Lr, Ls, and Lt between the three-phase AC system 1 and air conditioner 2. The harmonic suppression device 10 is also called an active filter 10.

The harmonic suppression device 10 includes a passive filter 11 for system interconnection, interconnection reactors 14r, 14s, and 14t, power converter 20 connected to the system lines Lr, Ls, and Lt through the passive filter 11 and interconnection reactors 14r, 14s, and 14t, detector (detecting means) 15 arranged between connecting locations of the passive filter 11 on the system lines Lr, Ls, and Lt and air conditioner 2 and configured to detect currents (referred to as load currents) Ir and Is flowing from the three-phase AC system 1 to the full-wave rectifying circuit 3 of the air conditioner 2, detector (detecting means) 16 connected to the system lines Lr, Ls, and Lt and configured to detect voltages (referred to as system voltages) Vr, Vs, and Vt of the AC system 1, detector (detecting means) 17 arranged between connections of the passive filter 11 and power converter 20 and configured to detect currents flowing through the interconnection reactors 14r, 14s, and 14t, i.e., compensating currents (also referred to as output currents) Icr, Ics, and Ict, and controller 30 configured to control the power converter 20 according to the detection results of these detectors 15, 16, and 17.

The passive filter 11 includes an LC circuit constituted of a reactor 12r and capacitor 13r connected to the system line Lr, LC circuit constituted of a reactor 12s and capacitor 13s connected to the system line Ls, and Lc circuit constituted of a reactor 12t and capacitor 13t connected to the system line Lt.

The power converter 20 is, for example, a three-phase two-level converter, includes a switching circuit 21 including a plurality of semiconductor switch elements, DC capacitor 22 a conduction path of which is formed through the aforementioned switching circuit 21, and voltage detector 23 configured to detect a voltage of the DC capacitor 22, and supplies compensating currents Icr, Ics, and Ict used to suppress harmonic components contained in the load currents Ir, Is, and It to the system lines Lr, Ls, and Lt by switching (on-off) of semiconductor switch elements of the switching circuit 21.

The controller 30 retains (stores) current values of the load currents Ir and Is detected by the detector 15 in an internal memory 30a at intervals of a predetermined time t within one cycle T of each of the voltages Vr, Vs, and Vt of the AC system 1, calculates a weighted average value of a predetermined number N of the latest current values (reference data) among the retained current values, detects harmonic components contained in the load currents Ir, Is, and It on the basis of the calculated weighted average value, obtains target values of compensating currents Icr, Ics, and Ict to be added to the load currents Ir, Is, and It for the purpose of suppressing the detected harmonic components, and creates and outputs compensating voltages Vcr, Vcs, and Vct necessary to supply the compensating currents Icr, Ics and Ict of the target values to the system lines Lr, Ls, and Lt by means of the power converter 20. The current values retained in the internal memory 30a are updated each cycle T.

The predetermined time t is a time (T/6) obtained by dividing the one cycle T of the voltage of the AC system 1 by the number "6" of the diodes 3a to 3f of the full-wave rectifying circuit 3 which is the harmonic-generating load.

Furthermore, the controller 30 variably sets the predetermined number N of the current values to be used to calculate the aforementioned weighted average value according to the state of the AC system 1. More specifically, the controller 30 sets the standard number Na determined in advance as the predetermined number N at the time of startup of the operation of the power converter 20 (N←Na), and corrects the predetermined number N in the direction of increase or direction of decrease according to the state of the AC system 1. As the state of the AC system 1, there are a sag which is a temporary fall in the voltage (source voltage) of the AC system 1, imbalance in the phase voltages of the AC system 1, stable state of the AC system 1, and the like.

The controller 30 determines, when absolute values of the system voltage Vr, Vs, and Vt or absolute values of differential values of a d-axis load current Id and q-axis load current Iq obtained by subjecting the load currents Ir and Is to coordinate transformation are greater than or equal to a threshold, that a sag has occurred in the system voltages Vr, Vs, and Vt, determines, when the unbalanced factor B of the system votages Vr, Vs, and Vt is greater than or equal to a threshold Bs, that an imbalance has occurred in the system voltages Vr, Vs, and Vt, and determines, when the absolute values of the system voltages Vr, Vs, and Vt and differential values of the d-axis load current Id and q-axis load current Iq obtained by subjecting the load currents Ir and Is to coordinate transformation fall within a specified value for a fixed time, that the AC system 1 is in a stable state. Further, the controller 30 corrects, at the time of determination that a sag has occurred, the predetermined number N in the direction of increase by, for example, "1" (N<-N+1), corrects, at the time of determination that an imbalance has occurred, the predetermined number N in the direction of decrease by, for example, "1" (N←N-1), and restores, at the time of determination that the AC system 1 is in the stable state, the predetermined number N to the standard number Na (N←Na).

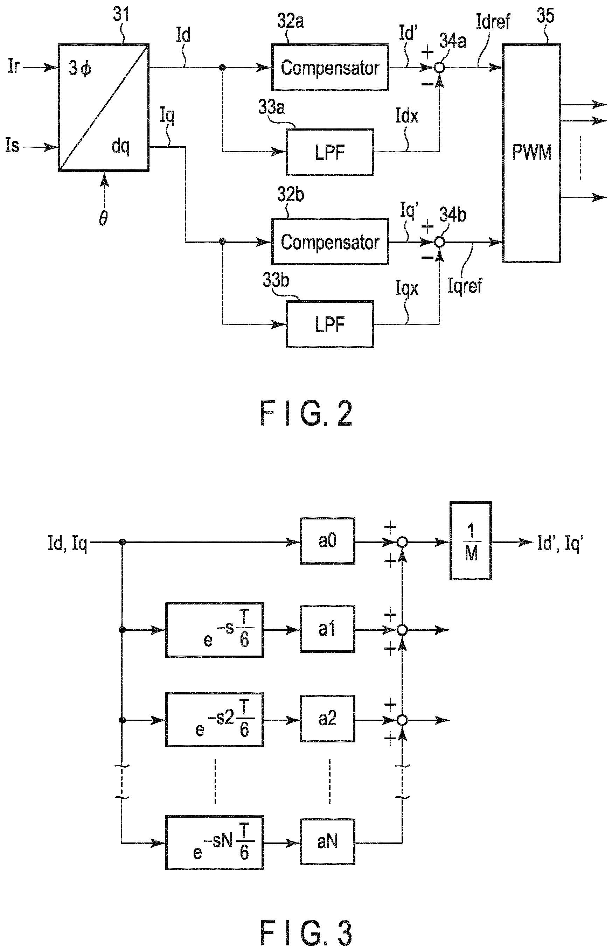

The configuration of a main part of the controller 30 is shown in FIG. 2.

A coordinate transformation unit 31 converts the values of the load currents Ir and Is detected by the detector 15 into the d-axis load current Id and q-axis load current Iq by rotational coordinate transformation based on the phase θ of the system voltages Vr, Vs, and Vt detected by the detector 16.

A compensator 32a includes, as in the case of the k-step compensator shown in aforementioned Non Patent Literature 1, a processing circuit shown in FIG. 3, continuously stores/retains the current value of the d-axis load current Id obtained by the coordinate transformation unit 31 at intervals of a predetermined time t (=T/6) within one cycle T of each of the voltages Vr, Vs, and Vt of the AC system 1 in the internal memory 30a as reference data, and calculates the weighted average value Id' of the predetermined number N of the latest current values among the retained current values.

A compensator 32b, in the same manner as the compensator 32a, also continuously stores/retains the current value of the q-axis load current Iq obtained by the coordinate transformation unit 31 at intervals of a predetermined time t (=T/6) within one cycle T of each of the voltages Vr, Vs, and Vt of the AC system 1 in the internal memory 30a as reference data, and calculates the weighted average value Iq' of the predetermined number N of the latest current values among the retained current values.

A low-pass filter 33a extracts a low-frequency component Idx of the d-axis load current Id obtained by the coordinate transformation unit 31. A low-pass filter 33b extracts a low-frequency component Iqx of the q-axis load current Iq obtained by the coordinate transformation unit 31.

An operation unit 34a detects harmonic components contained in the load currents Ir, Is, and It by subtracting the low-frequency component Idx extracted by the low-pass filter 33a from the weighted average value Id' calculated by the compensator 32a, and calculates a target value (command value) Idref of the d-axis compensating current to be added to the d-axis load current Id for the purpose of suppressing the detected harmonic components.

An operation unit 34b detects harmonic components contained in the load currents Ir, Is, and It by subtracting the low-frequency component Iqx extracted by the low-pass filter 33b from the weighted average value Iq' calculated by the compensator 32b, and calculates a target value (command value) Iqref of the q-axis compensating current to be added to the q-axis load current Iq for the purpose of suppressing the detected harmonic components.

The target value Idref of the d-axis compensating current and target value Iqref of the q-axis compensating current correspond to the target values of the compensating currents Icr, Ics, and Ict to be added to the load currents Ir, Is, and It for the purpose of suppressing the harmonic components. The compensating currents Icr, Ics, and Ict imply electric currents to be added, in order to approximate the load currents Ir, Is, and It to the sinusoidal waves synchronized with the system voltage Vr, Vs, and Vt to the extent possible, to the aforementioned load currents Ir, Is, and It.

A pulse width modulator (PWM) 35 calculates three-phase compensating currents Icr, Ics, and Ict which become the target from a voltage of a modulation wave signal of a frequency identical to the system voltages Vr, Vs, and Vt to be detected by the detector 16 and target values Idref and Iqref calculated by the operation units 34a and 34b by means of a built-in current controller, and creates a drive signal for each switch element of the switching circuit 21 by pulse-width modulation of comparing each of the aforementioned current target values and carrier waveform of the PWM control with each other. Each switch element of the switching circuit is turned on/off by the created drive signal, whereby the compensating voltages Vcr, Vcs, and Vct necessary to supply the compensating currents Icr, Ics, and Ict of the target values to the system lines Lr, Ls, and Lt are output from the switching circuit 21. Concomitantly with the output, the compensating currents Icr, Ics, and Ict of the target values flow from the switching circuit 21 to the system lines Lr, Ls, and Lt. By the compensating currents Icr, Ics, and Ict, the harmonic components contained in the load currents Ir, Is, and It are suppressed.

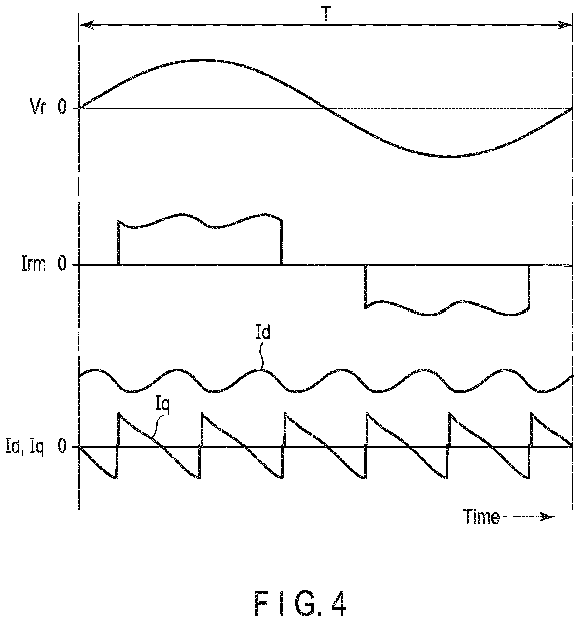

In the waveforms of the system voltage Vr, load current Ir, d-axis load current Id, and q-axis load current Iq of FIG. 4, when attention is paid to the d-axis load current Id and q-axis load current Iq, the same amplitude is repeated at intervals of a predetermined time t (=T/6). In the k-step compensator shown in aforementioned Non Patent Literature 1, the aforementioned amplitude-repetition characteristics are utilized to refer to data at intervals of a predetermined time t and obtain the weighted average value of the data items.

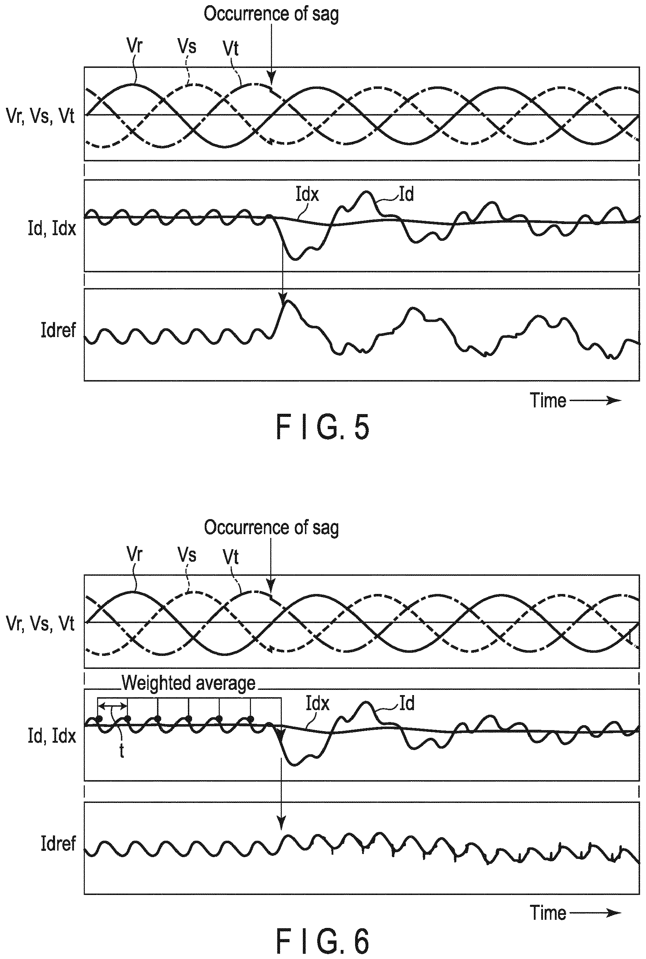

In FIG. 5, changes in the d-axis load current Id, low-frequency component Idx, and target value Idref of the case where a sag occurs in the system voltages Vr, Vs, and Vt in the state where no compensator 32a is provided are shown. The d-axis load current Id is largely varied by the influence of the sag and, concomitantly with the variation, the target value Idref is also largely varied. When the compensating currents Icr, Ics, and Ict created according to this target value Idref are supplied to the system lines Lr, Ls, and Lt, the system lines Lr, Ls, and Lt are brought into an overcurrent state and there is a possibility of the air conditioner 2 being led to a shutdown due to the effect of overcurrent protection.

In FIG. 6, changes in the d-axis load current Id, low-frequency component Idx, and target value Idref of a case where a sag occurs in the system voltages Vr, Vs, and Vt in a state where a compensator 32a is provided and the predetermined number N of the current values to be used (referred to) by the compensator 32a to calculate the weighted average value is "6" are shown. Although the d-axis load current Id is largely varied by the influence of the sag, variation in the target value Idref is suppressed.

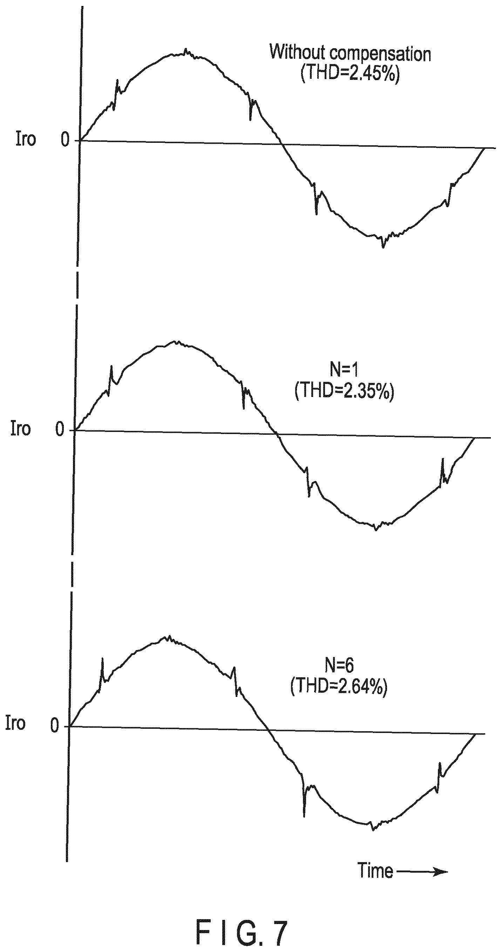

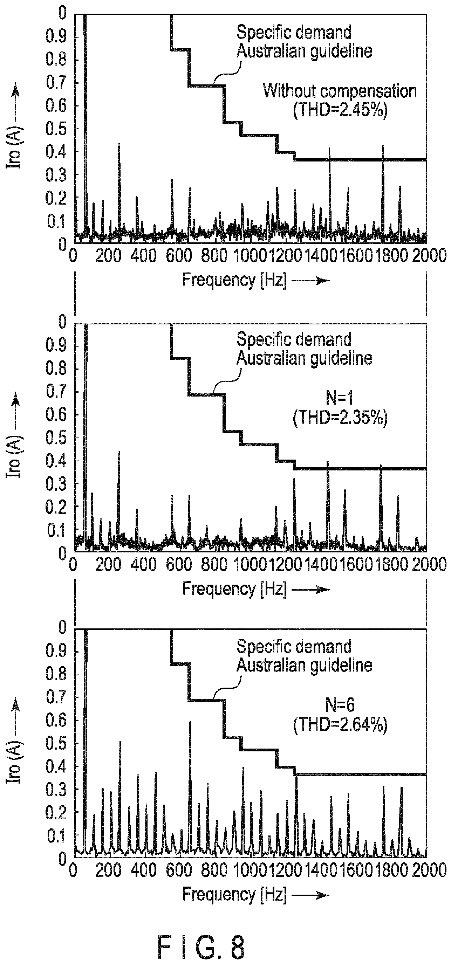

FIG. 7 shows the state where a distortion occurring in the system current Iro differs according to presence/absence of compensators 32a and 32b and the predetermined number N of the current values used (referred to) for calculation of the weighted average when the AC system 1 is in a stable state. FIG. 8 shows, for each of frequencies, the state where a distortion occurring in the effective value of the system current Iro differs according to presence/absence of compensators 32a and 32b and the predetermined number N of the current values used (referred to) for calculation of the weighted average when the AC system 1 is in a stable state. The distortion factor occurring in the system current Iro when no compensators 32a and 32b are provided is 2.45%, distortion factor occurring in the system current Iro when the predetermined number N is "1" is 2.35%, and there is no much difference between both the distortion factors. In comparison with this, the distortion factor occurring in the system current Iro when the predetermined number N is "6" deteriorates to 2.64%. The reason for the deterioration is that a quantization error occurs in the timing for retaining (storing) the current value in the internal memory 30a at intervals of a predetermined time t, and the quantization errors are accumulated concomitantly with the increase in the number N. When the number N is "6", the accumulation of the quantization error becomes larger, and hence it becomes difficult to capture the current value at appropriate timing occurring at intervals of a predetermined time t.

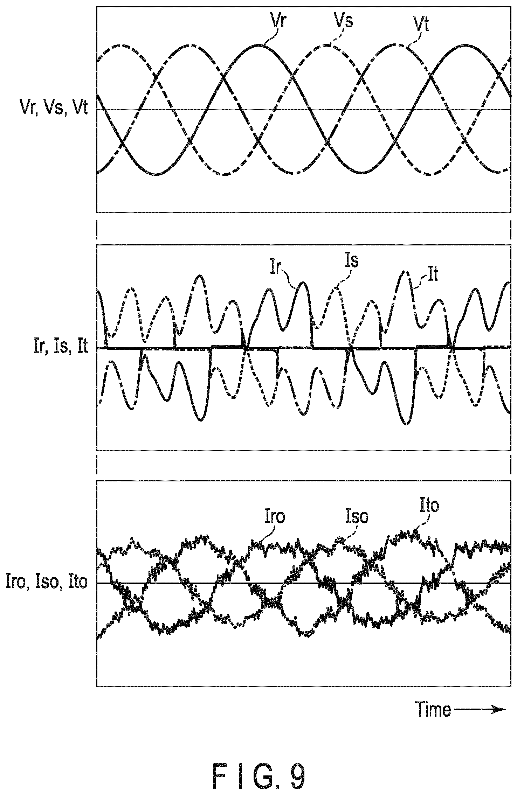

FIG. 9 shows the system currents Iro, Iso, and Ito of a case where an imbalance occurs in the system voltages Vrp, Vso, and Vto in a state where no compensators 32a and 32b are provided together with the system voltages Vr, Vs, and Vt and load currents Ir, Is, and It. The distortion factor of the system current Ito is 12.5%.

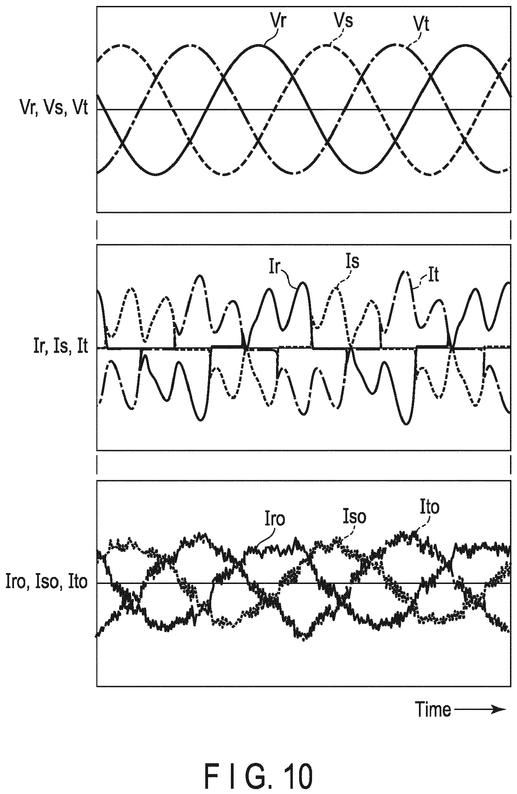

FIG. 10 shows the system currents Iro, Iso, and Ito of a case where an imbalance occurs in the system voltages Vro, Vso, and Vto in a state where compensators 32a and 32b are provided and the predetermined number N is "1" together with the system voltages Vr, Vs, and Vt and load currents Ir, Is, and It. The distortion factor of the system current Ito is 13.7%.

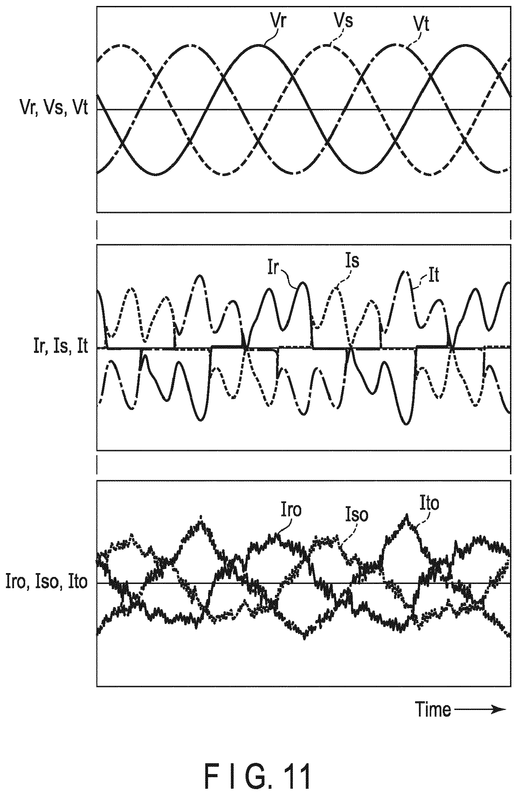

FIG. 11 shows the system currents Iro, Iso, and Ito of a case where an imbalance occurs in the system voltages Vro, Vso, and Vto in a state where compensators 32a and 32b are provided and the predetermined number N is "6" together with the system voltages Vr, Vs, and Vt and load currents Ir, Is, and It. The distortion factor of the system current Ito deteriorates to 23.5%.

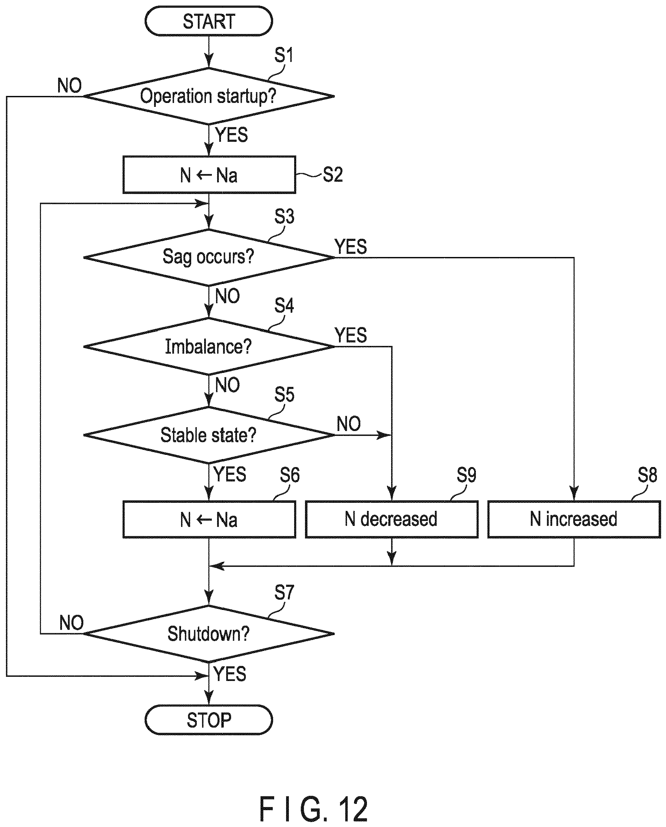

The controller 30 executes, in order to suppress the current distortions corresponding to the states of the AC system 1, the control shown in the flowchart of FIG. 12.

When starting the operation of the power converter 20 (YES of S1), the controller 30 sets a standard number Na (for example, "2") determined in advance as the predetermined number N of the current values used (referred to) for calculation of the weighted average value carried out by the compensators 32a and 32b (S2; N←Na).

Subsequently, the controller 30 maintains, when no sag occurs in the system voltages Vr, Vs, and Vt (NO of S3), there is no imbalance in the system voltages Vr, Vs, and Vt (NO of S4) and, moreover, the AC system 1 is in the stable state (YES of S5), setting of the standard number Na as the predetermined number N (S6). Then, when no shutdown instruction is issued (NO of S7), the controller 30 returns to the sag determination of S3 described above.

When a sag occurs in the system voltages Vr, Vs, and Vt (YES of S3), the controller 30 corrects the predetermined number N by "1" in the direction of increase (S8; N←N+1). Then, when no shutdown instruction is issued (NO of S7), the controller 30 returns to the sag determination of S3 described above.

When although there is no occurrence of a sag in the system voltages Vr, Vs, and Vt (No of S3), an imbalance occurs in the system voltages Vr, Vs, and Vt (YES of S4), the controller 30 corrects the predetermined number N by "1" in the direction of decrease (S9; N<-N-1). Tnen, when no shutdown instruction of the power converter 20 is issued (NO of S7), the controller 30 returns to the sag determination of S3 described above.

When although there is no occurrence of a sag in the system voltages Vr, Vs, and Vt (NO of S3), and there is no imbalance in the system voltages Vr, Vs, and Vt (NO of S4), the AC system 1 is not in the stable state (NO of S5), the controller 30 corrects the predetermined number N by "1" in the direction of decrease (S9; N←N-1). Then, when no shutdown instruction of the power converter 20 is issued (NO of S7), the controller 30 returns to the sag determination of S3 described above.

When there is no occurrence of a sag in the system voltages Vr, Vs, and Vt (NO of S3), there is no imbalance in the system voltages Vr, Vs, and Vt (NO of S4) and, moreover, the AC system 1 is restored to the stable state (YES of S5), the controller 30 restores the predetermined number N to the standard number Na (S6) .

When a shutdown instruction of the power converter 20 is issued (YES of S7), the controller 30 terminates the series of control.

As described above, by using the compensators 32a and 32b configured to cope with a sudden change in the load currents Ir, Is, and It for control of the power converter 20, the resistance against the power-disturbed state such as occurrence of a sag in the AC system 1, occurrence of voltage imbalance, and the like is improved.

That is, the predetermined number N of the current values used for calculation of the weighted average value carried out by the compensators 32a and 32b is variably set according to the state of the AC system 1, and hence it is possible to reduce the distortion of the system currents Iro, Iso, and Ito concomitant with the adoption of the compensators 32a and 32b.

Although in the embodiment described above, the descriptions have been given by taking the case where the harmonic-generating load is a full-wave rectifying circuit 3 of a diode-bridge as an example, even in the case where the harmonic-generating load is a 12-pulse rectifier or 18-pulse rectifier, implementation can be made by using the predetermined time t (=T/6).

Furthermore, in the case where a 12-pulse rectifier is used in order to further reduce the harmonics, the amplitude of each of the load currents Ir, Is, and It is repeated at intervals of T/12, and hence, regarding the timing at which the current value is to be retained in the compensators 32a and 32b, the predetermined time t may be made T/12. Likewise, in the case of a 18-pulse rectifier, the amplitude of each of the load currents Ir, Is, and It is repeated at intervals of T/18, and hence, regarding the timing at which the current value is to be retained in the compensators 32a and 32b, the predetermined time t may be made T/18 (t=T/18).

[2] A second embodiment of the present invention will be described below with reference to the accompanying drawings.

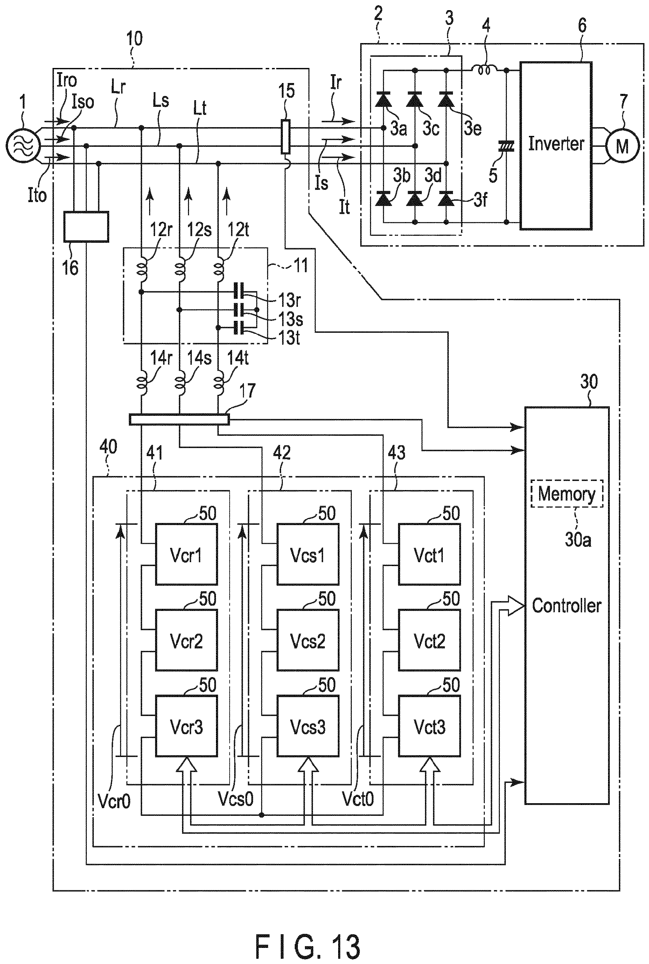

As shown in FIG. 13, a harmonic suppression device 10 includes a power converter 40 in place of the power converter 20. The power converter 40 is a so-called multilevel converter (MMC) and includes three clusters 41, 42, and 43 corresponding to the phases of the system lines Lr, Ls, and Lt.

The cluster (first cluster) 41 includes a plurality of unit converters (first unit converters; cells) 50 each of which selectively creates a plurality of levels of (multilevel) DC voltages by switching and outputs the created DC voltages, and is a so-called multiple series converter cluster formed by connecting (cascade-connecting) the aforementioned unit converters 50 in series. The cluster 41 creates an AC voltage Vcr0 (=Vcr1+Vcr2+Vcr3) having a waveform similar to a sinusoidal wave and configured to reduce harmonics by adding the output voltages (cell output voltages) Vcr1, Vcr2, and Vcr3 of the unit converters 50 together, and outputs the created AC voltage.

The cluster (second cluster) 42 includes a plurality of unit converters (second unit converters; cells) 50 each of which selectively creates a plurality of levels of DC voltages by switching and outputs the created DC voltages, and is a so-called multiple series converter cluster formed by connecting the aforementioned unit converters 50 in series. The cluster 42 creates an AC voltage Vcs0 (=Vcs1+Vcs2+Vcs3) having a waveform similar to a sinusoidal wave and configured to reduce harmonics by adding the output voltages Vcs1, Vcs2, and Vcs3 of the unit converters 50 together, and outputs the created AC voltage.

The cluster (third cluster) 43 includes a plurality of unit converters (third unit converters; cells) 50 each of which selectively creates a plurality of levels of DC voltages by switching and outputs the created DC voltages, and is a so-called multiple series converter cluster formed by connecting the aforementioned unit converters 50 in series. The cluster 43 creates an AC voltage Vct0 (=Vct1+Vct2+Vct3) having a waveform similar to a sinusoidal wave and configured to reduce harmonics by adding the output voltages Vct1, Vct2, and Vct3 of the unit converters 50 together, and outputs the created AC voltage.

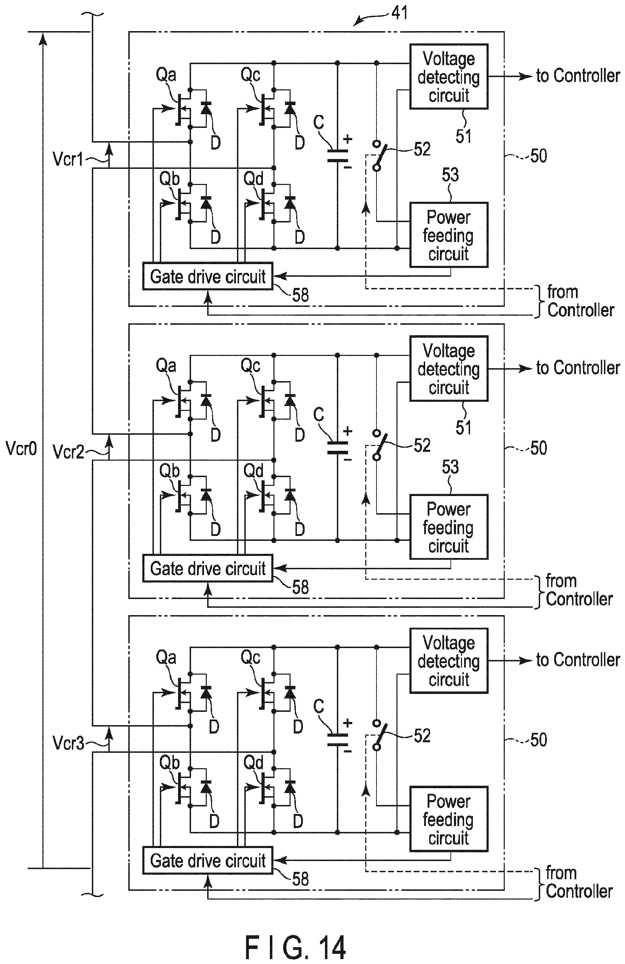

The specific configuration of each unit converter 50 is shown in FIG. 14.

The unit converter 50 includes a pair of output terminals, semiconductor switch elements Qa, Qb, Qc, and Qd each of which includes a circulation diode (free-wheeling diode), DC capacitor C connected to the aforementioned output terminals through these semiconductor switch elements Qa to Qd, gate drive circuit 58 configured to drive the semiconductor switch elements Qa to Qd according to a drive signal supplied thereto from the controller 30, power feeding circuit 53 acquiring an operating voltage of the gate drive circuit 58 from the voltage (capacitor voltage) of the capacitor C, and voltage detecting circuit 51 configured to detect the voltage of the capacitor C and notify the controller 30 of the detected voltage, creates DC voltages of a plurality of levels by selective formation of a plurality of conduction paths based on switching (turning on/off) of the semiconductor switch elements Qa to Qd, and outputs the DC voltages.

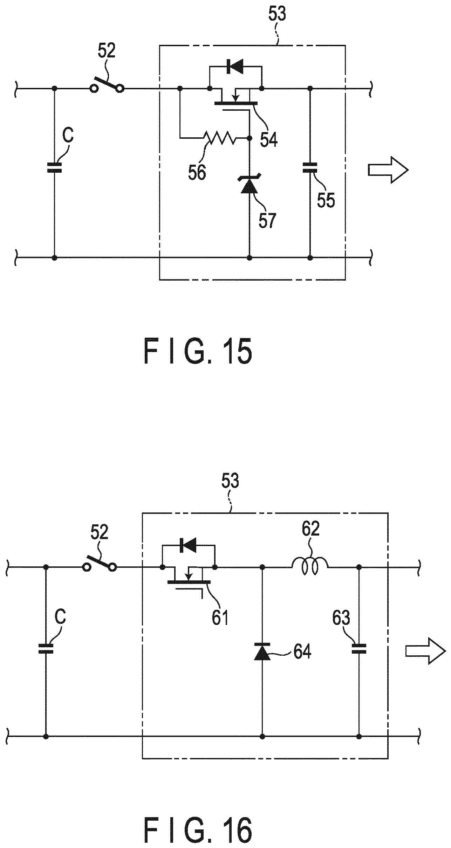

A switch 52 such as a relay contact or the like is inset into a conduction path between the capacitor C and power feeding circuit 53 in an inserting manner so as to connect the switch 52 between the capacitor C and power feeding circuit 53. The power feeding circuit 53 includes, as shown in FIG. 15, a semiconductor switch element 54 such as a MOSFET or the like, capacitor 55 connected in parallel with the capacitor C through a portion of the semiconductor switch element 54 between the drain and source thereof and switch 52, and series circuit of a resistor 56 and zener diode 57 connected to the capacitor C through the switch 52, and is a series regulator configured to apply the zener voltage of the zener diode 57 to the gate of the semiconductor switch element 54. The voltage of the capacitor 55 serves as the operating voltage of the gate drive circuit 58.

The controller 30 retains (stores) the current values of the load currents Ir and Is detected by the detector 15 in the internal memory 30a at intervals of a predetermined time t within one cycle T of each of the voltages Vr, Vs, and Vt of the AC system 1, calculates a weighted average value of a predetermined number N of the latest current values (reference data) among the retained current values, detects harmonic components contained in the load currents Ir, Is, and It on the basis of the calculated weighted average value, obtains target values of compensating currents Icr, Ics, and Ict to be added to the load currents Ir, Is, and It for the purpose of suppressing the detected harmonic components, creates compensating voltages Vcr0, Vcs0, and Vct0 necessary to supply the compensating current Icr, Ics, and Ict of the target values to the system lines Lr, Ls, and Lt by means of the power converter 40, and outputs the created compensating voltages Vcr0, Vcs0, and Vct0.

Further, when switching the semiconductor switch elements Qa to Qd of the unit converter 50, the controller 30 turns on the switch 52 to thereby form a conduction path from the capacitor C to the power feeding circuit 53 and, when no switching of the semiconductor switch elements Qa to Qd is carried out, the controller 30 turns off the switch 52 to thereby break the conduction path from the capacitor C to the power feeding circuit 53. Owing to the break of the conduction path, the fault that the voltage of the capacitor C is consumed as standby power is resolved.

Other configurations and control are identical to the first embodiment.

### [3] Modified Example

Regarding the power feeding circuit 53 of the second embodiment, not only the series regulator but also a DC/DC converter shown in FIG. 16 may be used. This DC/DC converter includes a semiconductor switch element 61 such as a MOSFET or the like, reactor 62, capacitor 63 connected in parallel with the capacitor C through a portion of the semiconductor switch element 61 between the drain and source thereof, reactor 62 and switch 52, and diode 64 for formation of a discharge path for the capacitor 63, and the voltage of the capacitor 63 serves as the operating voltage of the gate derive circuit 58.

This DC/DC converter has efficiency higher than the aforementioned series regulator. However, in the case where it is assumed that no switch 52 is provided, a phenomenon where the voltages of the capacitors C in the unit converters 50 become imbalanced occurs at the time of non-switching of the semiconductor switch elements Qa to Qd of the unit converter 50.

In order to prevent this fault from occurring, the controller 30 turns on the switch 52, when switching of the semiconductor switch elements Qa to Qd of the unit converter 50 is carried out, to thereby form a conduction path from the capacitor C to the power feeding circuit 53 and, when no switching of the semiconductor switch elements Qa to Qd is carried out, the controller 30 turns off the switch 52 to thereby break the conduction path from the capacitor C to the power feeding circuit 53. Owing to this break, the fault that the voltage of the capacitor C is consumed as standby power is resolved and, at the same time, the fault that the voltages of the capacitors C in the unit converters 50 become imbalanced is resolved.

Further, when an overvoltage abnormality that the voltages of the capacitors C in the unit converters 50 vary from the predetermined threshold occurs, the controller 30 turns off the switch 52 to thereby break the conduction path from the capacitor C to the power feeding circuit 53. Owing to this break too, the fault that the voltages of the capacitors C in the unit converters 50 become imbalanced is resolved.

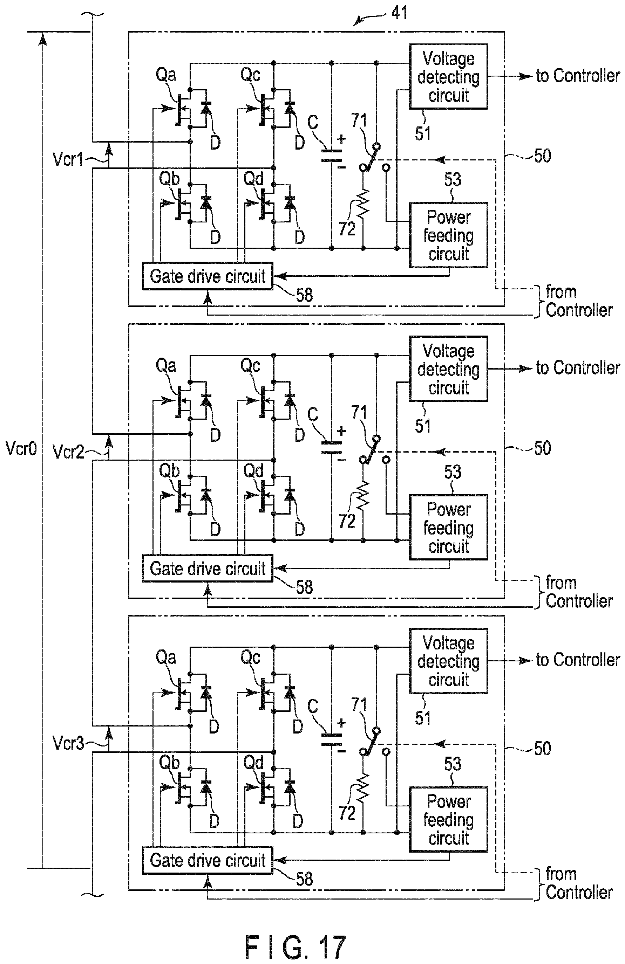

It should be noted that as shown in FIG. 17, a configuration in which a two-way contact switch (transfer switch) 71 is provided in place of the switch 52, one of the contact points of the switch 71 is inset into a conduction path from the capacitor C to the power feeding circuit 53 for connection in an inserting manner, and a discharge resistor 72 is connected in parallel with the capacitor C through the other of the contact points of the switch 71 may also be adopted.

In this case, when an overvoltage abnormality that the voltages of the capacitors C in the unit converters 50 vary from the predetermined threshold occurs, the controller 30 makes one of the contact points off to thereby break the conduction path from the capacitor C to the power feeding circuit 53. At this time, the other of the contact points is made on, and hence a discharge path for the capacitor C is formed through the discharge resistor 72. Thereby, it is possible to resolve the fault that the overvoltage state of the capacitor C needlessly continues.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A harmonic suppression device **characterized by** comprising:
a power converter (20) which is connected to system lines (Lr, Ls, and Lt) between an AC system (1) and a load (2), creates AC voltages, and outputs the created AC voltages to the system lines (Lr, Ls, and Lt); and
a controller (30) which retains current values of load currents (Ir, Is, and It) flowing through the system lines (Lr, Ls, and Lt) at intervals of a predetermined time (t) within one cycle (T) of each of voltages (Vr, Vs, and Vt) of the AC system (1), detects harmonic components contained in the load currents (Ir, Is, and It) on the basis of a predetermined number (N) of current values among the retained current values, obtains compensating currents (Icr, Ics, and Ict) to be added to the load currents (Ir, Is, and It) in order to suppress the detected harmonic components, causes the power converter (20) to output the obtained compensating currents (Icr, Ics, and Ict), and variably sets the predetermined number (N) according to a state of the AC system (1).

2. The harmonic suppression device of claim 1, **characterized in that**
the controller (30) calculates a weighted average value of the predetermined number (N) of the latest current values among the retained current values, and detects the harmonic components on the basis of the calculated weighted average value.

3. The harmonic suppression device of claim 1, **characterized in that**
when starting up an operation of the power converter (20), the controller sets a standard number (Na) determined in advance as the predetermined number (N), and corrects the predetermined number (N) in a direction of increase or in a direction of decrease according to a state of the voltages (Vr, Vs, and Vt) of the AC system (1).

4. The harmonic suppression device of claim 1, **characterized in that**
the controller detects, as the state of the AC system (1), occurrence of a sag in the voltages of the AC system (1), occurrence of an imbalance of the voltages (Vr, Vs, and Vt) of the AC system (1), and a stable state of the AC system (1).

5. The harmonic suppression device of claim 4, **characterized in that**
when starting up an operation of the power converter (20), the controller (30) sets a standard number (Na) determined in advance as the predetermined number (N), corrects the predetermined number (N) in a direction of increase when a sag occurs in the voltages (Vr, Vs, and Vt) of the AC system (1), corrects the predetermined number (N) in a direction of decrease when an imbalance occurs in the voltages (Vr, Vs, and Vt) of the AC system (1), and restores the predetermined number (N) to the standard number (Na) when the AC system (1) is in a stable state.

6. The harmonic suppression device of claim 5, **characterized in that**
the controller (30) determines, when absolute values of differential values of the voltages (Vr, Vs, and Vt) or the currents of the AC system (1) are greater than or equal to a threshold, that a sag has occurred, determines, when an unbalanced factor (B) of the voltages (Vr, Vs, and Vt) of the AC system (1) is greater than or equal to a threshold (Bs), that an imbalance has occurred, and determines, when the voltages (Vr, Vs, and Vt) or the currents of the AC system (1) fall within a specified value for a fixed time, that the AC system (1) is in a stable state.

7. The harmonic suppression device of any one of claims 1 to 6, **characterized in that**
the AC system (1) is a three-phase AC source,
the load (2) includes a full-wave rectifying circuit (3) which is constituted of bridge connection of six diodes (3a to 3f) and subjects the voltages (Vr, Vs, and Vt) of the AC system (1) to full-wave rectification, and
the predetermined time (t) is a time (=T/6) obtained by dividing one cycle (T) of each of the voltages (Vr, Vs, and Vt) of the AC system (1) by the number "6" of the diodes (3a to 3f).

8. The harmonic suppression device of claim 1, **characterized in that**
the AC system (1) is a three-phase AC source,
the power converter (40) is a multilevel converter (MMC) including a first cluster (41), a second cluster (42), and a third cluster (43),
the first cluster (41) includes a plurality of first unit converters (50) each of which is constituted of a plurality of first semiconductor switch elements (Qa to Qd) and one first capacitor (C), and selectively outputs a plurality of levels of DC voltages, and is formed by series connection of these first unit converters (50),
the second cluster (42) includes a plurality of second unit converters (50) each of which is constituted of a plurality of second semiconductor switch elements (Qa to Qd) and one second capacitor (C), and selectively outputs a plurality of levels of DC voltages, and is formed by series connection of these second unit converters (50), and
the third cluster (43) includes a plurality of third unit converters (50) each of which is constituted of a plurality of third semiconductor switch elements (Qa to Qd) and one third capacitor (C), and selectively outputs a plurality of levels of DC voltages, and is formed by series connection of these third unit converters (50).

9. The harmonic suppression device of claim 1, **characterized in that**
the load (2) is an air conditioner and includes a full-wave rectifying circuit (3) which subjects the voltages (Vr, Vs, and Vt) of the AC system (1) to full-wave rectification, a DC capacitor (5) connected to output ends of the full-wave rectifying circuit (3) through a DC reactor (4), an inverter (6) which converts a voltage of this DC capacitor (5) into AC voltages of a predetermined frequency, and a compressor motor (7) operated by the output of this inverter (6).
